# DEMANDE DE BREVET EUROPEEN

(11) **EP 3 725 962 A2**
(43) Date de publication de la demande: **21.10.2020**
(21) Numéro de dépôt: 20169847.9
(22) Date de dépôt: 16.04.2020
(51) Int. Cl.: E03F 1/00

(54) **SYSTÈME DE TOILETTES À VIDE COMPRENANT DES MOYENS DE DÉTECTION DE FUITE**

(30) Priorité: 19.04.2019 FR 1904210
(71) Demandeur: ALSTOM Transport Technologies, 93400 Saint-Ouen-sur-Seine (FR)
(72) Inventeur: GOYOT, Aurelien, 77860 ST GERMAIN SUR MORIN (FR); HMAD, Ouadie, 77240 CESSON (FR)
(74) Mandataire: Lavoix

(57) **Abrégé**

Le système de toilettes à vide (10) comprend une cuvette de toilettes (12), un réservoir (16) d'eaux usées sous vide, et une vanne (30) d'éjection d'air contenu dans le réservoir d'eaux usées (16). Il comporte des moyens (36) de surveillance de la fréquence d'activation de la vanne d'éjection (30), comprenant un capteur (38) d'activation de la vanne d'éjection (30).

## Description

La présente invention concerne un système de toilettes à vide, notamment destiné à équiper un véhicule de transport public, tel qu'un véhicule ferroviaire.

On connait déjà, dans l'état de la technique, un système de toilettes à vide, comprenant une cuvette de toilettes, un réservoir d'eaux usées sous vide, et une vanne de décharge intercalée entre la cuvette de toilettes et le réservoir d'eaux usées. Lorsque la vanne de décharge est ouverte, les effluents provenant de la cuvette de toilettes sont aspirés vers le réservoir d'eaux usées. Le système comporte également une vanne d'éjection d'air contenu dans le réservoir d'eaux usées, permettant notamment de refaire le vide dans le réservoir d'eaux usées après activation de la vanne de décharge.

Dans certains cas, l'étanchéité dans le système de toilettes peut être détériorée, si bien que des fuites peuvent survenir, nuisant au maintien du vide dans le réservoir d'eaux usées. De telles fuites peuvent entraîner une mise hors service du système de toilettes à vide.

L'invention a notamment pour but de remédier à cet inconvénient, en permettant d'éviter une mise hors service impromptue du système de toilettes à vide.

A cet effet, l'invention a notamment pour objet un système de toilettes à vide, comprenant :
- une cuvette de toilettes,
- un réservoir d'eaux usées sous vide, et
- une vanne d'éjection d'air, propre à évacuer de l'air contenu dans le réservoir d'eaux usées,
caractérisé en ce qu'il comporte des moyens de surveillance de la fréquence d'activation de la vanne d'éjection, comprenant un capteur d'activation de la vanne d'éjection.

En cas de fuite dans le système, le vide est recréé régulièrement dans le réservoir d'eaux usées, par activation de la vanne d'éjection d'air. Ainsi, la vanne d'éjection d'air est activée d'autant plus souvent que la fuite est importante.

Le capteur d'activation de la vanne d'éjection permet de surveiller le nombre d'activations de la vanne d'éjection d'air, pour en déduire la présence d'une fuite si la fréquence d'activation de la vanne d'éjection dépasse une première valeur prédéfinie.

De manière optionnelle, le système de toilettes à vide comprend :
- une vanne de décharge intercalée entre la cuvette de toilettes et le réservoir d'eaux usées, la vanne de décharge comprenant une conduite et un organe d'ouverture/fermeture de la conduite, l'organe d'ouverture/fermeture étant propre à être déplacé entre une position ouverte, dans laquelle il autorise le passage d'un fluide circulant dans la conduite, et une position fermée, dans laquelle la conduite est obturée, la vanne de décharge comprenant en outre au moins un joint d'étanchéité coopérant avec l'organe d'ouverture/fermeture pour assurer l'étanchéité en position fermée,
- un organe de commande d'activation de la vanne de décharge,
- un capteur de pression agencé pour mesurer la pression dans le réservoir d'eaux usées, et
- des moyens de calcul d'une intégrale de l'évolution de la pression dans le réservoir d'eaux usées pendant une durée prédéfinie faisant suite à l'activation de la vanne de décharge.

De préférence, l'organe d'ouverture/fermeture est une boule agencée dans la conduite et percée en son centre par une ouverture traversante, la boule étant mobile en rotation autour d'un axe perpendiculaire à l'ouverture, entre la position ouverte où l'ouverture communique avec la conduite, et la position fermée où l'ouverture ne communique pas avec la conduite, l'au moins un joint d'étanchéité coopérant avec la boule percée pour assurer l'étanchéité en position fermée.

La boule de la vanne de décharge est en contact permanent avec les joints d'étanchéité, si bien qu'elle génère un frottement contre les joints d'étanchéité lorsqu'elle est en rotation. Ce frottement provoque une usure des joints d'étanchéité, détériorant le fonctionnement du système de toilettes, jusqu'à ce que le système de toilettes soit hors service lorsque l'usure des joints d'étanchéité est trop importante.

Le capteur de pression permet d'étudier le comportement de la pression dans le réservoir d'eaux usées lors de l'activation de la vanne de décharge, notamment grâce au calcul de l'intégrale de l'évolution de la pression dans le réservoir d'eaux usées pendant une durée prédéfinie faisant suite à l'activation de la vanne de décharge.

La présente invention met en lumière le fait que, lorsque la valeur de cette intégrale est supérieure à une seconde valeur prédéfinie, cela un nombre de fois prédéfini, et que, dans le même temps, ladite fréquence d'activation de la vanne d'éjection d'air dépasse ladite première valeur prédéfinie, alors il existe une fuite sur les joints d'étanchéité, qui nécessiteront d'être remplacés.

L'invention permet donc, en combinant le capteur d'activation et le capteur de pression, de réaliser un diagnostic sur la provenance d'une fuite, si bien qu'un technicien peut remplacer les joints d'étanchéité lorsque cela est nécessaire, cela préalablement à une mise hors service accidentelle du système de toilettes.

Un système de toilettes selon l'invention peut comporter l'une ou plusieurs des caractéristiques suivantes, prises seules ou selon toutes combinaisons techniquement envisageables :
- Le capteur d'activation est un capteur de tension.
- Le système de toilettes à vide comprend une sortie d'air connectée à la vanne d'éjection d'air, et comprenant un filtre anti-odeurs agencé entre le réservoir d'eaux usées et la sortie d'air, le capteur de pression étant agencé en amont du filtre anti-odeurs.

L'invention concerne également un procédé de détection de fuites dans un système de toilettes à vide selon l'une quelconque des revendications précédentes, caractérisé en ce qu'il comporte la vérification, au moyen du capteur d'activation, de la fréquence d'activation de la vanne d'éjection d'air, une fuite étant détectée lorsque la fréquence d'activation dépasse une première valeur prédéfinie.

Un procédé de détection de fuite selon l'invention peut comporter l'une ou plusieurs des caractéristiques suivantes, prises seules ou selon toutes combinaisons techniquement envisageables :
- Le procédé de détection de fuites comprend : la surveillance de la pression dans le réservoir d'eaux usées, au moyen du capteur de pression, et, lorsque l'organe de commande d'activation est activé, le calcul d'une intégrale de l'évolution de la pression dans le réservoir d'eaux usées pendant une durée prédéfinie faisant suite à l'activation de la vanne de décharge, les joints d'étanchéité étant considérés comme usés lorsque cette intégrale calculée dépasse une seconde valeur prédéterminée, cela un nombre de fois prédéfini, et que ladite fréquence d'activation dépasse ladite première valeur prédéfinie.
- Le procédé de détection de fuites comprend une étape préalable de caractérisation de la seconde valeur, réalisée avec des joints neufs, comportant l'activation de l'organe de commande d'activation un grand nombre de fois, et pour chaque activation le calcul de l'intégrale correspondante, de manière à obtenir un intervalle comprenant toutes les intégrales calculées, la seconde valeur étant choisie supérieure ou égale à une borne supérieure de cet intervalle.
- La première valeur prédéfinie est comprise entre une activation par 60 secondes et une activation par 5 secondes.

L'invention concerne enfin un véhicule de transport public, caractérisé en ce qu'il comprend au moins une enceinte équipée d'un système de toilettes à vide tel que défini précédemment.

L'invention sera mieux comprise à la lecture de la description qui va suivre, donnée uniquement à titre d'exemple et faite en se référant aux figures annexées, parmi lesquelles :
- [Fig 1] la figure 1 représente schématiquement un système de toilettes selon un exemple de mode de réalisation de l'invention ;
- [Fig 2] la figure 2 est une vue en coupe d'une vanne de décharge équipant le système de toilettes de la figure 1 ;
- [Fig 3] la figure 3 est un graphique représentant l'évolution de la pression dans un réservoir d'eaux usées du système de toilettes de la figure 1, lorsque la vanne de décharge est actionnée ; et
- [Fig 4] la figure 4 représente la distribution d'une pluralité d'intégrales de l'évolution de la pression lors d'activations de la vanne de décharge, montrant, pour chaque valeur d'intégrale obtenue, le nombre d'occurrence de cette valeur.

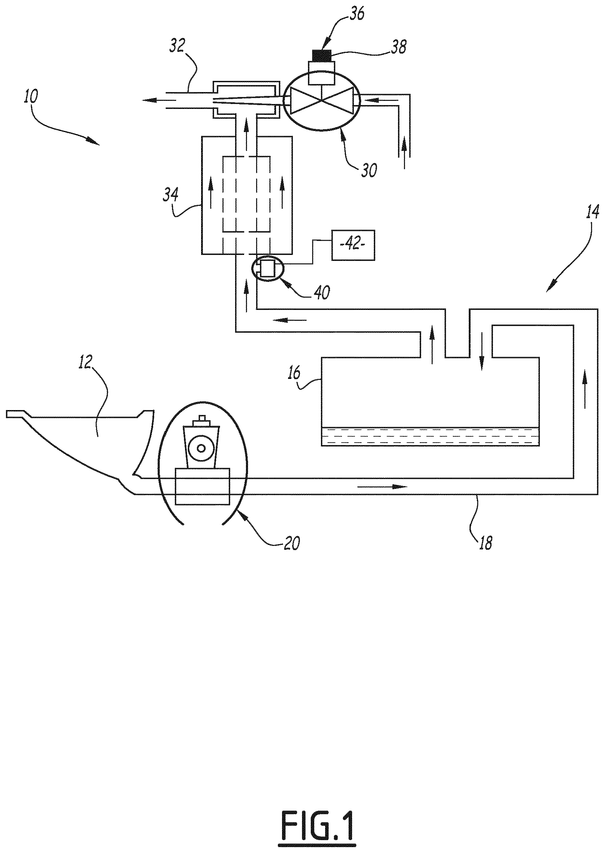

On a représenté sur la figure 1 un système 10 de toilettes à vide selon un exemple de mode de réalisation de l'invention. Le système de toilettes 10 est par exemple destiné à équiper un dispositif public, notamment un véhicule de transport public, et plus particulièrement un véhicule ferroviaire.

Le système de toilettes 10 est agencé dans une cabine de toilettes classique, qui ne sera pas décrite en détail. Cette cabine de toilettes peut comporter tout équipement adéquat envisageable.

Le système de toilettes 10 comporte une cuvette de toilettes 12 reliée à un dispositif 14 d'évacuation des effluents.

Le dispositif d'évacuation 14 comporte un réservoir 16 d'eaux usées sous vide, connecté à la cuvette de toilettes 12 via une canalisation 18.

Le dispositif d'évacuation 14 comporte également une vanne de décharge 20 intercalée, sur la canalisation 18, entre la cuvette de toilettes 12 et le réservoir d'eaux usées 16.

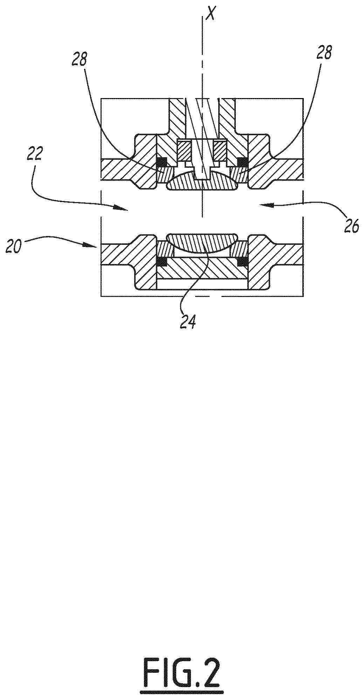

La vanne de décharge 20, représentée plus en détail sur la figure 2, comprend une conduite 22 et un organe 24 d'ouverture/fermeture de la conduite. L'organe d'ouverture/fermeture 24 est propre à être déplacé entre une position ouverte, dans laquelle il autorise le passage d'un fluide circulant dans la conduite 22, et une position fermée, dans laquelle la conduite 22 est obturée. La vanne de décharge 20 comprend en outre au moins un joint d'étanchéité 28 coopérant avec l'organe d'ouverture/fermeture 24 pour assurer l'étanchéité en position fermée.

Dans l'exemple décrit, l'organe d'ouverture/fermeture 24 est formé par une boule 24, logée dans la conduite 22, et percée en son centre par une ouverture traversante 26. La conduite 22 communique de part et d'autre avec la canalisation 18.

La boule percée 24 est mobile en rotation autour d'un axe X perpendiculaire à l'ouverture 26, entre une position ouverte où l'ouverture 26 communique avec la conduite 22 (comme cela est représenté sur la figure 2), et une position fermée où l'ouverture 26 ne communique pas avec la conduite 22.

La vanne de décharge 20 comprend en outre au moins un joint d'étanchéité 28, de préférence deux joints d'étanchéité 28, coopérant avec la boule percée 24 pour assurer l'étanchéité en position fermée.

La vanne de décharge 20 est classique et ne sera pas décrite plus en détail.

La vanne de décharge 20 est actionnée au moyen d'un organe de commande d'activation (non représentée) présente dans la cabine de toilettes, par exemple une commande de chasse d'eau classique.

Le réservoir d'eaux usées 16 est maintenu sous vide, par exemple à une pression sensiblement égale à -40 kPA (c'est-à-dire 40 kPA sous la pression atmosphérique). A cet effet, le système de toilettes 10 comporte une vanne 30 d'éjection d'air contenu dans le réservoir d'eaux usées. Cette vanne d'éjection 30 est, de manière classique, automatiquement actionnée dès que la pression dans le réservoir 16 est supérieure à un premier seuil prédéfini, par exemple supérieure à - 38 kPA.

Lorsqu'elle est actionnée, la vanne d'éjection 30 extrait l'air du réservoir 16 jusqu'à ce que la pression dans ce réservoir 16 passe sous un second seuil prédéfini, par exemple - 42 kPA. L'air extrait est alors évacué par une sortie d'air 32.

Avantageusement, un filtre anti-odeurs 34 est agencé entre le réservoir 16 et la sortie d'air 32. Ce filtre-anti odeur 34, de type classique, comporte un clapet anti-retour empêchant le retour d'air vers le réservoir 16.

Le système de toilettes 10 selon l'invention comporte des moyens 36 de surveillance de la fréquence d'activation de la vanne d'éjection 30 comprenant un capteur 38 d'activation de la vanne d'éjection 30. Le capteur d'activation 38 est destiné à détecter chaque fois que la vanne d'éjection 30 est actionnée. Par exemple, le capteur d'activation est un capteur de tension.

Les moyens de surveillance 36 mesurent la fréquence d'activation de la vanne d'éjection, exprimée en nombre d'activations par unité de temps.

Il apparait que la vanne d'éjection 30 est activée lorsque surviennent les évènements suivants :
a) Lorsque l'organe de commande d'activation de la vanne de décharge 20 est activé. La vanne de décharge 20 est alors ouverte, si bien que les effluents de la cuve de toilettes 12 sont aspirés vers le réservoir à eaux usées 16. De l'air est inévitablement également aspiré, faisant augmenter la pression dans le réservoir 16. La vanne d'éjection 30 est alors actionnée pour ramener la pression au niveau souhaité.
b) Le réservoir, et/ou les canalisations, présentent parfois de légers défauts d'étanchéité. La pression dans le réservoir peut alors augmenter au-dessus du seuil de déclenchement de la vanne d'éjection 30. Ces défauts d'étanchéité sont généralement acceptés, et causent des activations de la vanne d'éjection avec une première fréquence, généralement d'environ une activation toutes les 60 secondes, en moyenne.
c) En cas de fuite plus importante nécessitant une intervention d'un technicien, la pression dans le réservoir monte bien plus souvent au-dessus du seuil de déclenchement de la vanne d'éjection 30. De telles fuites causent des activations de la vanne d'éjection 30 avec une seconde fréquence, généralement d'environ une activation toutes les 5 secondes, en moyenne.

Lors de la conception du système de toilettes 10 selon l'invention, il convient de définir une première valeur prédéterminée, telle qu'il est considéré qu'il y a une fuite dans le système de toilettes 10 lorsque les moyens de surveillance 36 mesurent que la fréquence d'activation de la vanne d'éjection est supérieure à cette première valeur prédéterminée. Cette première valeur prédéterminée est généralement comprise entre la première fréquence et la seconde fréquence définies ci-dessus, en fonction de la tolérance souhaitée pour les fuites. La première valeur prédéterminée est par exemple choisie entre 1 activation toutes les 60 secondes et 1 activation toutes les 5 secondes.

Afin de diagnostiquer l'origine de la fuite, notamment si elle provient des joints d'étanchéité 28, le système de toilettes 10 comporte un capteur de pression 40 agencé pour mesurer la pression dans le réservoir d'eaux usées 16, et des moyens 42 de calcul d'une intégrale de l'évolution de la pression dans le réservoir d'eaux usées 16 pendant une durée prédéfinie faisant suite à l'activation de la vanne de décharge 20.

Le capteur de pression 40 est dans l'exemple décrit agencé entre le réservoir 16 et le filtre anti-odeurs 34.

Par exemple, la durée prédéfinie est d'environ 20 secondes, ce qui correspond habituellement au temps nécessaire pour retrouver une pression normale dans le réservoir d'eaux usées 16 après l'activation de la vanne de décharge 20.

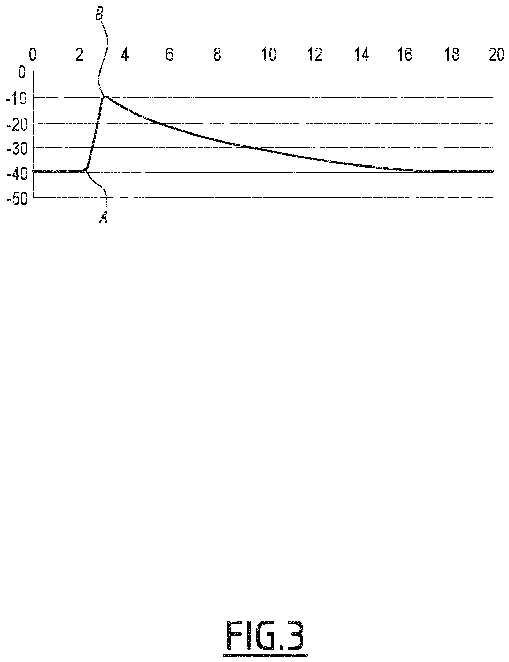

On a représenté sur la figure 3 cette évolution de la pression dans le réservoir d'eaux usées 16 pendant une durée prédéfinie faisant suite à l'activation de la vanne de décharge 20. Sur cette figure, l'axe des abscisses représente le temps en secondes, et l'axe des ordonnées la pression en kPA (la pression 0 correspondant à la pression de référence, généralement la pression atmosphérique).

Cette courbe de la figure 3 est obtenue avec des joints d'étanchéité 28 neufs.

Lors de l'activation de la vanne de décharge 20 (point A), la pression dans le réservoir 16 augmente brusquement dû à l'aspiration d'air dans ce réservoir 16, jusqu'à atteindre par exemple - 10 kPA (au point B).

La vanne d'éjection d'air 30 est alors activée, la pression étant supérieure à son seuil de déclenchement, pour éjecter l'air de ce réservoir 16, jusqu'à ce que la pression revienne à sa valeur initiale (- 40 kPA), généralement entre 14 et 20 secondes après l'activation de la vanne de décharge 20.

L'intégrale de l'évolution de la pression est par exemple déterminée en calculant l'aire entre la courbe de la figure 3 et l'axe des abscisses sur un intervalle prédéfini, par exemple de 20 secondes après l'activation de la vanne de décharge 20. Ce calcul d'intégrale est réalisé informatiquement de manière connue en soi.

En cas de fuite sur les joints d'étanchéité 28, le temps nécessaire à un retour de la pression à la normale est plus important, si bien que l'intégrale calculée est supérieure à celle calculée avec des joints d'étanchéité neufs.

Ainsi, on considèrera que les joints sont usés lorsque l'intégrale calculée est supérieure à une seconde valeur prédéterminée, cela un nombre de fois prédéfini, par exemple 3 fois sur 5 activations d'affilée de la vanne de décharge 20.

Cette seconde valeur prédéterminée est caractérisée préalablement, lorsque les joints sont neufs, en activant l'organe de commande d'activation un grand nombre de fois, et en notant, pour chaque activation, le calcul de l'intégrale correspondante, de manière à obtenir un intervalle comprenant toutes les intégrales calculées. La seconde valeur est alors choisie supérieure ou égale à une borne supérieure de cet intervalle.

Plus cette seconde valeur choisie est grande, plus on tolérera une usure importante des joints avant intervention pour leur remplacement.

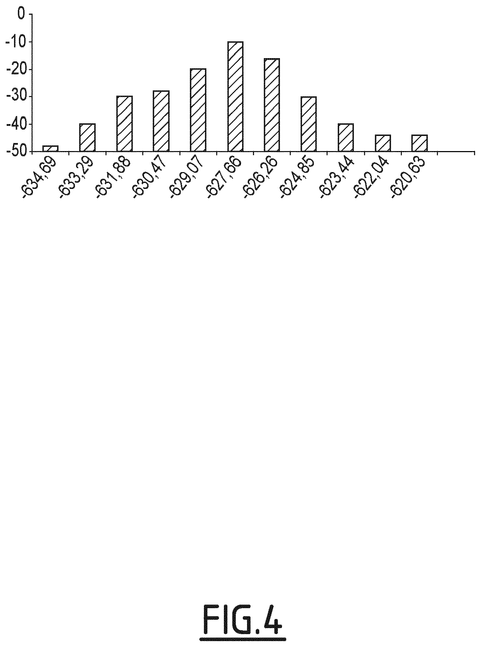

A titre d'exemple, la figure 4 représente la distribution d'une pluralité d'intégrales de l'évolution de la pression lors d'activations de la vanne de décharge. Sur cette figure, l'axe des abscisses donne la valeur des intégrales calculées, et l'axe des ordonnées donne, pour chaque intervalle de valeurs d'intégrales données, le nombre d'occurrences d'intégrales calculées tombant dans cet intervalle.

Conformément à cette figure, on choisira une seconde valeur supérieure à - 620,63 kPa.s.

Un procédé de détection de fuites dans le système de toilettes 10 tel que décrit précédemment va maintenant être décrit.

Le procédé comporte une étape préalable de caractérisation de la seconde valeur, réalisée avec des joints neufs, comportant l'activation de l'organe de commande d'activation un grand nombre de fois, et pour chaque activation le calcul de l'intégrale correspondante, de manière à obtenir un intervalle comprenant toutes les intégrales calculées, la seconde valeur étant choisie supérieure ou égale à une borne supérieure de cet intervalle.

Le procédé comporte par ailleurs, en continu, la vérification, au moyen du capteur d'activation, de la fréquence d'activation de la vanne d'éjection 40, une fuite étant détectée lorsque la fréquence d'activation dépasse une première valeur prédéfinie. Par exemple, la première valeur prédéfinie est 1 activation toutes les 5 secondes.

Le procédé comporte également la surveillance de la pression dans le réservoir d'eaux usées, au moyen du capteur de pression, et, lorsque l'organe de commande d'activation est activé, le calcul d'une intégrale de l'évolution de la pression dans le réservoir d'eaux usées pendant une durée prédéfinie faisant suite à l'activation de la vanne de décharge.

Les joints d'étanchéité sont considérés comme usés lorsque cette intégrale calculée dépasse la seconde valeur prédéterminée, cela un nombre de fois prédéfini (par exemple 3 fois au cours de 5 activations d'affilée), et que ladite fréquence d'activation dépasse ladite première valeur prédéfinie.

Dans ce cas, une alerte peut être émise, pour prévenir que l'intervention d'un technicien est requise pour remplacer les joints d'étanchéité.

On notera que l'invention n'est pas limitée au mode de réalisation précédemment décrit, mais pourrait présenter diverses variantes complémentaires sans sortir du cadre des revendications.

## Revendications

1. Système (10) de toilettes à vide, comprenant :
- une cuvette de toilettes (12),
- un réservoir (16) d'eaux usées sous vide, et
- une vanne (30) d'éjection d'air, propre à évacuer de l'air contenu dans le réservoir d'eaux usées (16),
**caractérisé en ce qu'**il comporte des moyens (36) de surveillance de la fréquence d'activation de la vanne d'éjection (30), comprenant un capteur (38) d'activation de la vanne d'éjection (30).

2. Système de toilettes à vide (10) selon la revendication 1, dans lequel le capteur d'activation (38) est un capteur de tension.

3. Système de toilettes à vide (10) selon la revendication 1 ou 2, comprenant :
- une vanne de décharge (20) intercalée entre la cuvette de toilettes (12) et le réservoir d'eaux usées (16), la vanne de décharge (20) comprenant une conduite (22) et un organe (24) d'ouverture/fermeture de la conduite, l'organe d'ouverture/fermeture (24) étant propre à être déplacé entre une position ouverte, dans laquelle il autorise le passage d'un fluide circulant dans la conduite (22), et une position fermée, dans laquelle la conduite (22) est obturée, la vanne de décharge (20) comprenant en outre au moins un joint d'étanchéité (28) coopérant avec l'organe d'ouverture/fermeture (24) pour assurer l'étanchéité en position fermée,
- un organe de commande d'activation de la vanne de décharge (20),
- un capteur de pression (40) agencé pour mesurer la pression dans le réservoir d'eaux usées (16), et
- des moyens (42) de calcul d'une intégrale de l'évolution de la pression dans le réservoir d'eaux usées (16) pendant une durée prédéfinie faisant suite à l'activation de la vanne de décharge (20).

4. Système de toilettes à vide (10) selon la revendication 3, dans lequel l'organe d'ouverture/fermeture est une boule (24) agencée dans la conduite et percée en son centre par une ouverture traversante (26), la boule (24) étant mobile en rotation autour d'un axe (X) perpendiculaire à l'ouverture (26), entre la position ouverte où l'ouverture (26) communique avec la conduite (22), et la position fermée où l'ouverture (26) ne communique pas avec la conduite (22), l'au moins un joint d'étanchéité (28) coopérant avec la boule percée (24) pour assurer l'étanchéité en position fermée.

5. Système de toilettes à vide (10) selon la revendication 3 ou 4, comprenant une sortie d'air (32) connectée à la vanne d'éjection d'air (30), et comprenant un filtre anti-odeurs (34) agencé entre le réservoir d'eaux usées (16) et la sortie d'air (32), le capteur de pression (40) étant agencé en amont du filtre anti-odeurs (34).

6. Procédé de détection de fuites dans un système de toilettes à vide (10) selon l'une quelconque des revendications précédentes, **caractérisé en ce qu'**il comporte la vérification, au moyen du capteur d'activation (38), de la fréquence d'activation de la vanne d'éjection d'air (30), une fuite étant détectée lorsque la fréquence d'activation dépasse une première valeur prédéfinie.

7. Procédé de détection de fuites selon la revendication 6, dans un système de toilettes à vide (10) selon l'une quelconque des revendication 3 à 5, comprenant :
- la surveillance de la pression dans le réservoir d'eaux usées (16), au moyen du capteur de pression (40),
- lorsque l'organe de commande d'activation est activé, le calcul d'une intégrale de l'évolution de la pression dans le réservoir d'eaux usées (16) pendant une durée prédéfinie faisant suite à l'activation de la vanne de décharge (20),
les joints d'étanchéité (28) étant considérés comme usés lorsque cette intégrale calculée dépasse une seconde valeur prédéterminée, cela un nombre de fois prédéfini, et que ladite fréquence d'activation dépasse ladite première valeur prédéfinie.

8. Procédé de détection de fuites selon la revendication 7, comprenant une étape préalable de caractérisation de la seconde valeur, réalisée avec des joints (28) neufs, comportant l'activation de l'organe de commande d'activation un grand nombre de fois, et pour chaque activation le calcul de l'intégrale correspondante, de manière à obtenir un intervalle comprenant toutes les intégrales calculées, la seconde valeur étant choisie supérieure ou égale à une borne supérieure de cet intervalle.

9. Procédé de détection de fuites selon l'une quelconque des revendications 6 à 8, dans lequel la première valeur prédéfinie est comprise entre une activation par 60 secondes et une activation par 5 secondes.

10. Véhicule de transport public, **caractérisé en ce qu'**il comprend au moins une enceinte équipée d'un système de toilettes à vide selon l'une quelconque des revendications 1 à 5.
